# EUROPEAN PATENT APPLICATION

(11) **EP 0 637 676 A1**
(43) Date of publication of application: **08.02.1995**
(21) Application number: 94905276.5
(22) Date of filing: 25.01.1994
(51) Int. Cl.: E21D 21/00

(54) **PLIANT BRACING PROP**

(30) Priority: 26.01.1993 RU 4362
(71) Applicant: LOGASHKIN, Sergei Alexeevich, Moscow, 105215 (RU)
(72) Inventor: LOGASHKIN, Sergei Alexeevich, Moscow, 105215 (RU); BASHKEEV, Gennady Egorovich, Alma-Ata, 480096 (KZ); MALYSHEV, Jury Nikolaevich, Moscow, 103117 (RU); MOREVA, Angelina Grigorievna, Moscow, 105215 (RU)
(74) Representative: OK pat AG
(86) International application number: RU9400011
(87) International publication number: WO9417262

(57) **Abstract**

A pliant bracing prop is disclosed comprising a distance element in the form of a tube which forms an expandable cavity (2) folded about the axis, the hollow space in the fold being occupied by a metal rod (1).

## Description

### Art

The present invention relates to mining industry, and, in particular, to mine support equipment, viz. to yielding roof bolting.

### Previous state of art

At present, yielding roof bolting is constructed in the form comprising a wave-like rod with a lock set at the back of a hole. The rod is placed in a holder manufactured in the shape of resilient wavy metallic strips which are bundled with elongating clamping clips at the ends. The degree of pliability is defined by the "waves" of the rod being limited by its straightening alone. The straightening is hindered with the "waves" of the holder due to friction caused by the movement along the hole's walls (SU, Inventor's Certificate No. 1283411).

Restricted pliability and small capacity in the pliable state do not welcome wide application of known supports. Besides, the design construction is stocked with expensive components.

Another type of roof bolting comprising a metallic rod with knurled surface and a resilient baloon as a strut which is mounted in a longitudinal slit made in the rod has been provided while the knurling details of the rod are made in the form of mobile spring pins (SU, Inventor's Certificate No. 1421872).

This arrangement possesses some pliability but limited to a great extent as the knurling details are manufactured in such a way that they do not slide along the walls of a hole but rigidly interact with it hardly shifting by gravity along the walls of a hole together with rock displacement thus promoting roof strata separation. The arrangement is rather complicated in manufacture to provide reliability and its field of application is limited by its rather little degree of pliability.

### Disclosure of invention

Basic claim is a mental concept to arrange details of a simple design of yielding roof bolting in such a way as to provide a possibility of regulating the degree of pliability.

To the accomplishment of the foregoing and related ends, it is due to the fact that the yielding roof bolting comprising the metallic rod and the strut manufactured in the form of a capacity liable to expanding, the latter is made with a longitudinal axial crease forming a cavity while the metallic rod is placed in the cavity of the axial crease of the strut.

Depending on the degree of pliability required from the roof bolt which in its turn is determined by the mining and geological conditions for the roof bolting application, the metallic rod can be placed along the entire length of the crease, can be manufactured shorter or longer than the length of the axial crease, i;e. it can be made with a protruding inner end. The latter makes it possible to elongate the roof bolting due to pushing forward the outer end of the metallic rod without any loss in the carrying capacity because the length of interaction of the metallic rod with wall of a hole remains unchangeable. The axial crease itself may be set parallel to the longitudinal axis of symmetry of the volume, or at an angle to it.

In order to obtain a greater rigidity the roof bolting may be provided with sleeves set on the ends of the strut and crimping its ends. This increases the reliability of sealing the capacity provided there are face welds, as well as the adaptability to streamlined manufacture and utilization of the admission opening to deliver the actuating medium under pressure inside the capacity.

It is expedient to fix the sleeves on the ends of the strut stiffly e.g. with the help of welds. The ends of the metallic rod placed in the cavity of the axial crease of the strut may be roved through the sleeves which crimp its ends or they may be let pass near the outer surface of the sleeves. In this case the sleeves may be placed at the outer side of the strut thus protecting the weld at its face from the forces actuated by expansion of the strut. The sleeves may be placed inside the cavity of the axial crease, too, around the metallic rod. In this case the rod moves inside these sleeves while interacting with their inner surface. It is expedient provided the surface of the metallic rod is rugged (for example, knurled) and during movement of the rod along the sleeve in the working position there arises a hazard of injury for leak-proofness of the capacity. The inner and outer sleeves may be connected with a jumper placed in the slot of the axial crease. It is expedient from the point of view of technological considerations, provided the sleeves are die-stamped as rings to be set at one bout during the mounting.

In order to confine the degree of pliability of the metallic rod it is expedient to manufacture its inner end with some limit stop for the metallic rod. For the purpose its inner end is made bent or flattened.

### Brief description of drawings

Further on, this invention has been described in terms of specific embodiments (it is not intended that the invention be limited to the disclosed embodiments) and drawing attached in which:
Fig.1 discloses a scheme for roof bolting with a longitudinal axial crease, principal view.
Fig.2 shows roof bolting in the working position with the sleeves.
Fig.3 shows roof bolting with the outer end of the metallic rod interacting with the outer surface of the sleeve.
Fig.4 illustrates the roof bolting according to Fig.3 in the working position.
Fig.5 shows roof bolting with the inner end of the metallic rod made bent.

### Best embodiments for invention

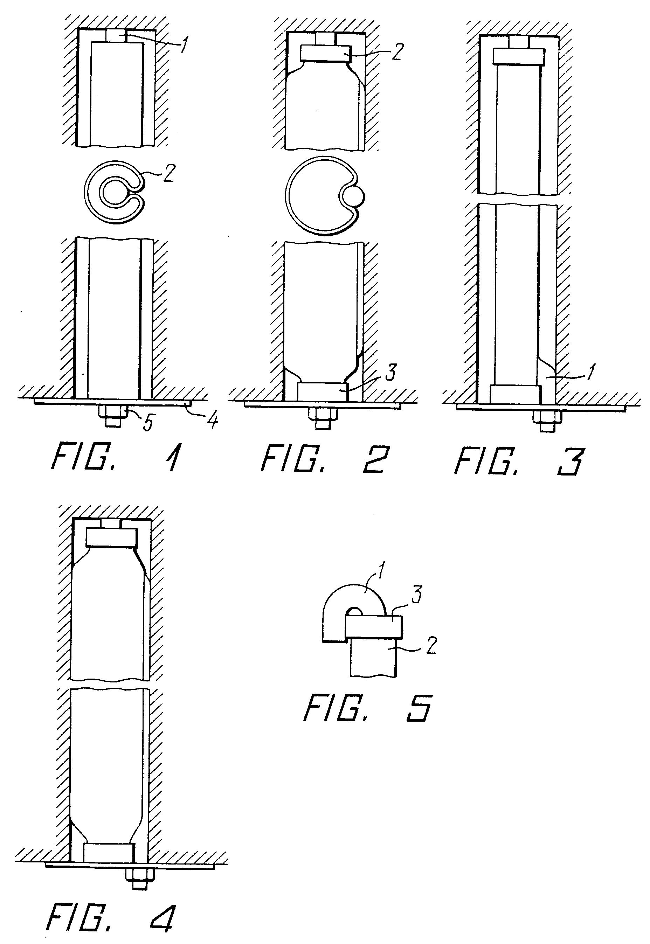

The roof bolting contains a metallic rod (1) set in a longitudinal (according to the drawing) axial crease of a capacity (2) liable to expanding. The roof bolting may be manufactured with sleeves (3) installed on the ends of a strut (2). In this case the ends of the metallic rod (1) can be disposed both inside the sleeves (3) or outside them. Fig.3 shows a modification when only the outer end interacts with the outer surface of the sleeve (3). The inner end of the metallic rod (1) can be arranged protruding or extra bent so as to interact with a side of the outer surface of the strut (2). The drawing shows a bedplate (4) and a nut (5) as well.

The embodiment operates in the following way.

The roof bolting in assembly is introduced in the hole drilled. The actuating medium under pressure is delivered in the pressure feed opening (not shown in Fig.). By expanding the strut (2) presses the metallic rod (1) out of the cavity of the crease to press it close to the wall of the hole. When setting the tie rod (1) in the working position a modification is possible with the capacity being expanded while the bedplate (4) and the nut (5) are put on. If upon expanding the capacity the contact of the bedplate (4) with the roof of the development is not sufficiently tight it is to be tightened with the nut (5). As the rock pressure and the structural conditions of rock massif on the spot of the roof bolting mounting undergo changes, the load on the metallic rod increases. As soon as the load exceeds the value of the added-up forces preventing the metallic rod (1) from shifting with regard to the strut (2), nothing interferes with the movement of the metallic rod (1) along the direction of the impetus acting on it. The movement will go on until these two forces i.e. load and friction get placed in equilibrium.

While the preferred particular embodiments of the invention have been shown and described, various modifications thereof will be apparent to those skilled in the art and therefore it is not intended that the invention be limited to the disclosed embodiments or to the details thereof and departures may be made therefrom within the spirit and scope of the invention as defined in the claims. For example, the crease may be placed as a snail while the strut may be shaped not only as a pipe, but in some other form depending on the configuration of the working.

### Applicability in industry

The invention was used for supporting mine workings.

The device of yielding roof bolting according to the invention contrived is simple in manufacture, reliable in operation and enjoys a practically unlimited degree of pliability.

## Claims

1. Yielding roof bolting comprising a metallic rod (1) and a strut carried out in the form of a capacity (2) liable to expanding **distinctive** by the fact that the strut is executed at least with one axial crease forming a cavity while the metallic rod is placed in the cavity of the axial crease of the strut.

2. Yielding roof bolting in conformity to Claim 1 **distinctive** by the fact that the metallic rod (1) is disposed along the entire length of the axial crease.

3. Yielding roof bolting in conformity to Claim 1 **distinctive** by the fact that the metallic rod (1) is disposed along a portion of the length of the axial crease.

4. Yielding roof bolting in conformity to Claim 1 **distinctive** by the fact that it is provided with sleeves (3) set on the ends of the strut.

5. Yielding roof bolting in conformity to Claims1 and 4 **distinctive** by the fact that the sleeves (3) are placed on the outer surface of the strut.

6. Yielding roof bolting in conformity to Claims 1 and 4 **distinctive** by the fact that the sleeves (3) are placed in the cavity of the axial crease.

7. Yielding roof bolting in conformity to Claims 4, 5 and 6 **diistinctive** by the fact that the sleeves (3) are connected with a jumper.

8. Yielding roof bolting in conformity to Claims 1 and 4 **distinctive** by the fact that the sleeves (3) are rigidly fixed on the ends of the strut.

9. Yielding roof bolting in conformity to Claims 1 and 4 **distinctive** by the fact that the ends of the metallic rod (1) are placed in the sleeves (3).

10. Yielding roof bolting in conformity to Claims 1 and 4 **distinctive** by the fact that at least one end of the metallic rod (1) is placed outside the sleeve (3 ).

11. Yielding roof bolting in conformity to Claim 1 **distinctive** by the fact that the inner end of the metallic rod (1) is made protruding.

12. Yielding roof bolting in conformity to Claims 1 and 11 **distinctive** by the fact that the inner end of the metallic rod (1) is provided with a limit stop.

13. Yielding roof bolting in conformity to Claims 1, 11 and 12 **distinctive** by the fact that the limit stop is made as a bent end of the metallic rod (1)

14. Yielding roof bolting in conformity to Claims 1, 11 and 12 **distinctive** by the fact that the limit stop is made as a flattened end of the metallic rod (1).

15. Yielding roof bolting in conformity to Claim 1 **distinctive** by the fact that the crease is set parallel to the longitudinal axis of symmetry of the strut.

16. Yielding roof bolting in conformity to Claim 1 **distinctive** by the fact that the crease is set at an angle to the longitudinal axis of symmetry of the strut.
